# EUROPÄISCHE PATENTSCHRIFT

(11) **EP 1 061 681 B1**
(45) Veröffentlichungstag und Bekanntmachung des Hinweises auf die Patenterteilung: **28.07.2004**
(21) Anmeldenummer: 00440134.5
(22) Anmeldetag: 09.05.2000
(51) Int. Cl.: H04J 13/00, H04B 7/26, H04B 1/707, H04L 7/06

(54) **Sende- und Empfangseinrichtung für ein synchrones Mehrpunkt-zu-Punkt CDMA Netzwerk**
Transmission and reception device for synchronous multipoint-to-point CDMA network
Dispositif de transmission et de réception pour un réseau CDMA synchrone multipoint à point

(30) Priorität: 18.06.1999 DE 19928019
(43) Veröffentlichungstag der Anmeldung: 20.12.2000
(73) Patentinhaber: ALCATEL, 75008 Paris (FR)
(72) Erfinder: Enssle, Jürgen, Dr., 70734 Fellbach (DE); Pelous, Marc, 71634 Ludwigsburg (DE)
(74) Vertreter: Menzietti, Domenico, Dipl.-Ing

(56) Entgegenhaltungen:
- EP-A- 0 678 991

## Beschreibung

Die Erfindung bezieht sich auf eine Sende- und eine Empfangseinrichtung für ein synchrones Mehrpunkt-zu-Punkt CDMA Netzwerk gemäß dem Oberbegriff des Patentanspruchs 1 bzw. dem Oberbegriff des Patentanspruchs 2 sowie auf ein Synchronisationsverfahren für ein synchrones Mehrpunkt-zu-Punkt CDMA Netzwerk gemäß dem Oberbegriff des Patentanspruchs 3.

Mehrpunkt-zu-Punkt CDMA Netzwerke werden zunehmend zur Realisierung von Rückkanälen in interaktiven Kommunikationsnetzen eingesetzt. Interaktive Kommunikationsnetze sind beispielsweise als sog. HFC-Netze oder HFR-Netze ausgeführt; HFC=Hybrid Fibre Coax, HFR=Hybrid Fibre Radio. Für den Vowärtskanal wird ein Punkt-zu-Mehrpunkt Netzwerk verwendet, das einen optischer Zubringer plus ein daran anschließendes Koaxialkabelnetz bzw. Funknetz beinhaltet. Für den Rückkanal wird zunehmend ein Mehrpunkt-zu-Punkt Netzwerk, z.B. ein CDMA Netzwerk verwendet, das optisch, elektrisch oder als Funknetz sowie in Mischformen ausgebildet werden kann; CDMA=Code Division Multiple Access.

Bei einem synchronen CDMA-Netzwerk mit einer Zentrale und einer Vielzahl von Endstellen kommt hinzu, daß die Endstellen auf den Takt (master clock) der Zentrale in Frequenz und Phase synchronisiert werden müssen. Der Takt der Zentrale wird über den Vorwärtskanal zu den Endstellen übertragen, die jeweils mittels einer PLL (Phase Locked Loop) eine Frequenzsynchronisations durchführen und eine Phasensynchronisation mit Phasenkorrektur, um ihren individuellen Takt zu generieren. Zur Aufsynchronisation sendet jede Endstelle ein Synchronisationssignal über den Rückkanal des CDMA Mehrpunkt-zu-Punkt Netzwerks zur Zentrale.

Aus W097/08861 ist ein Synchronisationsverfahren bekannt, bei dem Synchronisationssignale CDMA kodiert zur Zentrale gesendet werden. Der Rückkanal ist dabei zeitlich aufgeteilt in einen ersten Bereich, der für die Übermittlung von Informationssignalen reserviert ist und einen zweiten Bereich, der für die Übermittlung von Synchronisationssignalen reserviert ist. Der zweite Bereich steht somit nicht zur Informationsübermittlung zur Verfügung, wodurch die vorhandene Übertragungskapazität nicht optimal ausgenutzt wird.

Aus EP-A-0 678 991 ist ein Synchronisationsverfahren bekannt, bei dem zur Aufsynchronisation ein CDMA-kodiertes Synchronisationssignal von einer ersten zu einer zweiten Station gesendet wird, die zweite Station ihren Demodulator auf das empfangene Synchronisationssignal synchronisiert und anschließend eine Nachricht bezüglich der erfolgten Aufsynchronisation und eine Nachricht bezüglich einer Signalpegeljustierung für weitere Synchronisationssignale zur ersten Station sendet. Nach Empfang der Nachrichten sendet die erste Station CDMA-kodierte Daten und Synchronisationssignale, wobei letztere mit einem niedrigeren Signalpegel ausgesendet werden, um mögliche Interferenzen zu reduzieren.

Aufgabe der Erfindung ist es daher, ein Synchronisationsverfahren bereitzustellen, das den Einfluß auf die Informationsübermittlung minimiert.

Gelöst wird diese Aufgabe durch eine Sende- und eine Empfangs-einrichtung gemäß Patentanspruch 1 bzw. Patentanspruch 2 sowie ein Synchronisationsverfahren gemäß Patentanspruchs 3.

Anstelle einer zeitlichen Schachtelung von Informations- und Synchronisationssignalen wird eine gleichzeitige Aussendung vorgeschlagen, bei der die Synchronisationssignale den Informationssignalen überlagert werden. Die Synchronisationssignale werden mit einem speziellen Synchronisations-Kode kodiert, der nicht dem CDMA-Kommunikations-Kode der Informationssignale entspricht. Zudem werden die Synchronisationsignale mit einer im Vergleich zu den Informationsignalen geringeren Amplitude ausgesandt, um die Übertragung der Informationssignale nicht übermäßig zu stören. Auf der Empfangsseite werden die Synchronisationssignale durch Korrelation und anschließender Akkumulation detektiert. Durch dieses Verfahren wird die Übertragungskapazität für die Informationssignale maximiert. Es sind nun keine zeitlichen Lücken/Bereiche im Rückkanal mehr vorhanden; die Informationssignale können kontinuierlich ausgesandt werden. Zudem wird die Aufsynchronisationszeit dadurch verringert, daß erstens keine zeitlliche Lücke/Bereich mehr abgewartet werden muß, in der/dem die Übertragung der Synchronisationsignale zwingend erfolgen mußte, sondern die Synchronisationssignale können nun jederzeit ausgesandt werden. Zudem können adaptive Kollisionsauflösungsverfahren unter Einbeziehung der geschätzten Anzahl kollidierender Endstellen verwendet werden. Zweitens wird durch die Verwendung eines speziellen Synchronisations-Kodes, der wesentlich kürzer als der CDMA-Kommunikations-Kode ist, der Hardware-Aufwand für die Detektion der Synchronisationsignale reduziert.

Durch den Wegfall der Rahmenstruktur im Rückkanal wird des weiteren die Realiserung des gesamten Netzwerks aufgrund des Wegfalls einiger Schaltungselemente, z.B. Steuereinheit, etc. vereinfacht. Es kann eine für die Informationsübertragung vorteilhafte Struktur gewählt werden.

Die negative Beeinflussung der Informationssignale durch die Synchronisationssignale kann durch eine Regelung der Signalpegel, z.B. online unter Berücksichtigung der tatsächlichen Signal-zu-Rausch Verhältnisse minimiert werden.

Vorteilhafte Ausgestaltungen sind den abhängigen Ansprüchen zu entnehmen.

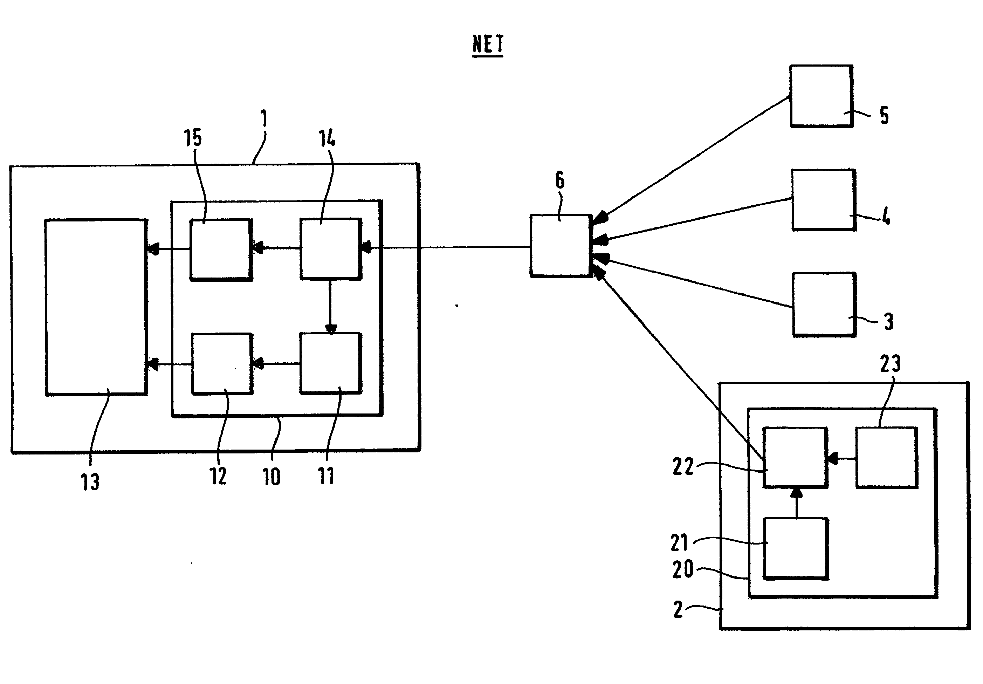

Im folgenden wird ein Ausführungsbeispiel der Erfindung unter Zuhilfenahme einer Figur erläutert. Die Figur zeigt
eine schematische Darstellung eines erfindungsgemäßen CDMA Mehrpunkt-zu-Punkt Netzwerks.

Das CDMA Mehrpunkt-zu-Punkt Netzwerk NET stellt den Teil eines interaktiven Kommunikationsnetzes dar, der für die Implementierung des Rückkanals vorgesehen ist. Für den Vorwärtskanal des interaktiven Kommunikationsnetzes, der für die Übertragung von breitbandigen Informationen, wie z.B. Fersehsignale, Videosignale, Steuersignale, von einer Zentrale zu mehreren Endstellen vorgesehen ist, ist aus Gründen der Übersichtlichkeit keine schematische Darstellung erfolgt. Der Vorwärtskanal kann beispielsweise durch ein hybrides Netzwerk implementiert werden, das ausgehend von der Zentrale die Endstellen über ein Verteilnetz aus optischen Glasfaserleitungen und optischen Splittern miteinander zu einem Punkt-zu-Mehrpunkt Netzwerk verknüpft. Anstelle von optischen Leitungen können auch elektrische verwendet werden oder ein Funknetz sowie eine Mischform aus den vorgenannten. An den Übergangsstellen werden sog. ONU, BONT oder BS verwendet; ONU=Optical Network Unit, BONT=Broadband Optical Network Termination, BS=Base Station.

Anstelle zweier separater Netzwerke für den Vorwärtskanal und den Rückkanal kann auch ein und dasselbe physikalische Netzwerk sowohl für den Vorwärts- als auch den Rückkanal verwendet werden. Dann ist das Netzwerk beispielsweise aus optischen Leitungen aufgebaut, wobei für den Vorwärtskanal üblicherweise eine andere Wellenlänge verwendet wird als für den Rückkanal.

Das CDMA Mehrpunkt-zu-Punkt Netzwerk NET stellt somit eine Möglichkeit einer Implementierung eines Rückkanals eines interaktiven Kommunikationsnetzes dar. Das CDMA Mehrpunkt-zu-Punkt Netzwerk NET beinhaltet eine Zentrale 1, die über optische Glasfaserleitungen und einem optischen Kombiner 6 mit im Ausführungsbeispiel vier Endstellen 2, 3, 4, 5, in realen Netzwerken beispielsweise mit eintausend Endstellen verbunden ist.

Die Zentrale 1, die üblicherweise auch als Head End bezeichnet wird, beinhaltet eine Empfangseinrichtung 10, die dem Empfang der von den Endstellen 2, 3, 4, 5 ausgesandten Informationssignalen, z.B. Anforderungssignale zur Übermittlung von Videofilmen, sog. Video-on-demand, oder web pages aus dem Internet, und der von den Endstellen 2, 3, 4, 5 ausgesandten Synchronisationssignalen dient. Die Zentrale 1 1 beinhaltet des weiteren eine Steuereinheit 13, die die Verarbeitung der empfangenen Signale übernimmt. Die Steuereinheit 13 ist beispielsweise als Prozessor plus Speicher, Register, etc. ausgeführt. Die Steuereinheit 13 hat eine Schnittstelle zu einer nicht dargestellten Sendeeinheit, die Informationssignale im Vorwärtskanal überträgt sowie ggf. weitere Schnittstellen, z.B. zu einer Fernsehanstalt für einen Zugang zu Fernsehsignalen, zu einem Internet-Serviceprovider für einen Zugang zum Internet, zu einem Video-Server für einen Zugang zu Videofilmen.

Die Empfangseinrichtung 10 der Zentrale 1 ist für ein synchrones Mehrpunkt-zu-Punkt CDMA Netzwerk NET ausgelegt und beinhaltet dementsprechend eine Einheit 15 zum Empfang und zur Detektion eines CDMA-kodierten Informationssignals und eine Einheit 11, 12 zum Empfang und zur Detektion eines Synchronisationssignals. Die Einheit 11, 12 beinhaltet einen logischen Korrelator 11 zur Korrelation von mindestens zwei zeitlich nacheinander ausgesandte, identische Synchronisationssignale mit einem Synchronisations-Kode, der kein CDMA-Kommunikations-Kode ist, und einen Akkumulator 12 zur Akkumulation der korellierten Synchronisationssignale. Der Signalpegel jedes Synchronisationssignals wird telemetrisch über die Zentrale 1 direkt eingestellt. Alternativ gibt die Zentrale 1 einen maximalen Pegel vor, der nicht überschritten werden darf, so daß eine indirekte Einstellung erfolgt. Die Zentrale 1 stellt die Signalpegel beispielsweise derart ein, daß der Summen-Signalpegel aller gleichzeitig gesendeten Synchronisationssignale mindestens 10dB niedriger als der Summen-Signalpegel aller gleichzeitig gesendeten Informationssignale ist. Die Zentrale mißt dazu alle über den Rückkanal empfangenen Signalpegel und errechnet daraus optimierte Signalpegel, die über den Vorwärtskanal zu den Endstellen übertragen werden. Die Messung mit anschließender Übertragung der erlaubten Signalpegelwerte erfolgt beispielsweise periodisch in vorgegebenen Zeitschlitzen, sog. time slots. Das Signal-zu-Rauschverhältnis der in der Zentrale 1 empfangenen Informationssignale darf durch die Synchronisationsignale nicht oder nur unwesentlich beeinträchtigt werden. Das Synchronisationssignal wird im gleichen Übertragungskanal wie das Informationssignal übertragen. Des weiteren ist eine Einheit 14 vorgesehen. Sie enthält beispielsweise einen Optisch/Elektrisch Umsetzer zum Umsetzen der empfangenen optischen Signale in elektrische zur weiteren elektrischen Verarbeitung. Die elektrischen Signale durchlaufen ggf. einen Verstärker, einen Filter, einen Entzerrer etc. Die so modifizierten Signale werden anschließend der Einheit 15 und der Einheit 11 bzw. 12 zugeführt.

Die Endstellen 2, 3, 4, 5 werden üblicherweise auch als Set-Top Unit, Set-Top Box, Decoder, Modem, ADSL Modem oder XDSL Modem bezeichnet. Jede Endstelle 2, 3, 4, 5 beinhaltet eine Sendeeinrichtung 20, die der Aussendung der von der entsprechenden Endstelle 2, 3, 4, 5 generierten Informationssignale, z.B. Anforderungssignale zur Übermittlung von Videofilmen, sog. Video-on-demand, oder web pages aus dem Internet, und der von der entsprechenden Endstelle 2, 3, 4, 5 generierten Synchronisationssignale zur Anmeldung und Aufsynchronisation bei der Zentrale 1 dient. Jede Endstelle 2, 3, 4, 5 beinhaltet des weiteren eine nicht dargestellte Steuereinheit, die die Verarbeitung der über den Vorwärtskanal empfangenen Signale übernimmt. Die Steuereinheit ist beispielsweise als Prozessor plus Speicher, Register, etc. ausgeführt. Die Steuereinheit hat beipielsweise eine Infrarot-Schnittstelle zum Empfang von über eine Fernbedienung ausgesandten Anforderungsignalen eines Teilnehmers und eine Schnittstelle zu einem Fernsehgerät und/oder einen Computer zur Darstellung der über den Vorwärtskanal empfangenen Informationen.

Die Sendeeinrichtung 20 der Endstelle 2 ist für ein synchrones Mehrpunkt-zu-Punkt CDMA Netzwerk NET ausgelegt. Die Sendeeinrichtung 20 beinhaltend eine Einheit 23 zur Generierung eines CDMA-kodierten Informationssignals sowie eine Einheit 21 zur Generierung eines Synchronisationssignals. Die Kodierung des Synchronisationssignals erfolgt mittels eines Synchronisations-Kodes, der kein CDMA-Kommunikations-Kode ist. Der Signalpegel des Synchronisationssignals ist in der Regel wesentlich niedriger, mindestens 1 0dB, z.B. 20dB niedriger als der Summen-Signalpegel der Informationssignale der aktiven Endstellen 2, 3, 4, 5. Die Signalleistung des Synchronisationssignals kann dynamisch variert werden, z.B. adaptiv in Abhängigkeit von der Anzahl der sich gleichzeitig aufsynchronisierenden Endstellen. Die Signalleistung wird so gewählt, daß die Summe der Signalleistungen aller sich aufsynchronisierenden Endstellen die Informationsübertragung nicht beeinträchtigt. Das Synchronisationssignal kann Steuersignale, wie z.B. Start der Synchronisation, Anzahl der zu sendenden Signale, Sendeleistung, Kollisionsauflösungssignale beinhalten. Die Zentrale 1 kann dann z.B. die Sendeleistung für die nachfolgend auszusendenden Synchronisationssignale telemetrisch über den Vorwärtskanal vorgeben. Das Synchronisationssignal wird im gleichen Übertragungskanal wie das Informationssignal ausgesandt. Des weiteren ist eine Einheit 22 vorgesehen. Die Einheit 22 beinhaltet beispielsweise einen Elektrisch/Optisch Umsetzer zur Umsetzung der elektrischen Informations- und Synchronisationssignale in optische und zur Aussendung der optischen Signale über die Glasfaserleitung. Die Einheit 22 beinhaltet ggf. einen Schalter, der verhindert, daß Synchronisationssignale und Informationssignale gleichzeitig ausgesandt werden. Zur Aufsynchronisation werden ausschließlich Synchronisationssignale, während der Informationsübertragung ausschließlich Informationssignale ausgesandt. Alternativ wird anstelle des Schalters ein Koppler verwendet.

Im folgenden wird ein Synchronisationsverfahren für das synchrone Mehrpunkt-zu-Punkt CDMA Netzwerk NET, das im Ausführungsbeipiel vier Endstellen 2, 3, 4, 5 und eine Zentrale 1 beinhaltet, beschrieben.

Die Endstellen 2, 3, 4, 5, die bereits aufsynchronisiert sind, senden CDMA-kodierte Informationssignale zur Zentrale 1. Die CDMA Kodierung erfolgt durch orthogonale Kodes. Jeder Endstelle 2, 3, 4, 5 werden ein oder mehrere individuelle Kodes zugewiesen, mittel derer sie ihre Informationen, d.h. zu übertragenden Daten vor der Aussendung kodiert. Als CDMA Kode kann z.B. ein Extended Preferentially Phased Gold Kode oder ein Walsh Hadamard Kode, jeweils mit einer Länge von 128 chips, verwendet werden.

Während nun bereits einige Endstellen, z.B. Endstellen 5 und 6 aufsynchronisiert sind und kontinuierlich, jeweils mit unterschiedlichen CDMA-Kommunikations-Kodes in einem vorgegebenen Übertragungskanal Informationssignale zur Zentrale 1 übertragen, kann sich eine noch nicht synchroniserte Endstelle, z.B. Endstelle 2 jederzeit und gleichzeitig zur Übertragung der Informationssignale Aufsynchronisieren, indem sie ein Synchronisationssignal generiert, das sie zeitlich nacheinander mehrfach an die Zentrale 1 sendet. Der Signalpegel des Synchronisationssignals ist dabei geringer als der Signalpegel des von einer Endstelle ausgesandte Informationssignals. Beispielsweise ist die Summe der Signalpegel der Synchronisationsignale aller sich aufsynchronisierenden Endstellen um 20dB geringer als die Summe der Signalpegel der Informationssignale aller Nutzinformation aussendenden Endstellen. Dadurch wird erreicht, daß die Synchronisationsignale die Informationsübermittlung nur in einer vernachlässibaren Weise beeinträchtigt.

Das Synchronisationsignal wird im gleichen Übertragungskanal wie das Informationssignal übertragen. Es sind damit keine Rahmen mehr vorgesehen, in denen zeitliche Bereiche zur exklusiven Nutzung einer bestimmten Übermittlung vorgesehen sind, sondern jede Endstelle 2, 3, 4, 5 ist frei ihre Synchronisationssignale zu jeder beliebigen Zeit zu senden, parallel zu gleichzeitig ausgesandten Informationssignalen anderer Endstellen 2, 3, 4, 5.

In der Zentrale 1 wird das empfangene Synchronisationssignal erst durch logische Korrelation 11 mit einem Synchronisations-Kode, der kein CDMA-Kommunikations-Kode ist, und anschließender Akkumulation 12 der korellierten Synchronisationssignale detektiert.

Als Synchronisations-Kode wird beipielsweise ein Barker Kode mit einer Länge von 11 chip verwendet. Die Länge des Synchronisations-Kodes ist damit mindestens um den Faktor fünf kürzer ist als die Länge des CDMA-Kommunikations-Kodes. Dadurch wird erreicht, daß die Detektion der Synchronisationsignale vereinfacht wird. Zudem wird die Beeinträchtigung der Informationsübermittlung durch den kürzeren Kode minimiert. Die Generierung eines Synchronisationssignals kann beispielsweise auf einfache Art und Weise dadurch erfolgen, daß der Barker-Kode mit einer vorgegebenen Signalleistung ausgesandt wird. Alternativ kann beispielsweise die Adresse der Endstelle 2, 3, 4, 5 mit dem Barker Kode moduliert und anschließend ausgesandt werden.

Der Akkumulator 12 ist beispielsweise als Register oder Integrator oder dgl. ausgeführt.

Der logische Korrelator 11 ist beispielsweise als Matched Filter, das auf den Synchronisations-Kode, z.B. Barker Kode abgestimmt ist, ausgeführt.

Bei der Verwendung von kohärenter Detektion wird zuerst korreliert und anschließend akkumuliert. Bei der Verwendung von quasi-kohärenter Detektion wird nach der Akkumulation eine Quadrierung durchgeführt. Bei der Verwendung von nicht-kohärenter Detektion wird zuerst korreliert, dann quadriert und anschließend akkumuliert.

In einer vorteilhaften Ausgestaltung der Erfindung ist die Empfangseinrichtung 10 dadurch gekennzeichnet, daß mindestens zwei logische Korrelatoren und mindestens zwei Akkumulatoren vorgesehen sind, um mindestens zwei Synchronisationsignale mit unterschiedlichen zeitlichen Relationen zu den Informationssignalen zu detektieren. In einem Matched Filter können mehrere logische Korrelatoren integriert sein, jeder Korrelator kann aber auch als separates Matched Filter ausgeführt sein. Die zusätzliche Verwendung von unterschiedlichen Synchronisations-Kodes hat den Vorteil, daß bei gleichzeitiger Aufsynchronisation unterschiedliche Endstellen 2, 3, 4, 5 schneller differenziert werden können und der Synchronisationsprozeß sich dadurch beschleunigt.

Nach Detektion des Synchronisationssignals wird unabhängig von der Anzahl der verwendeten Synchronisations-Kodes ein Algorithmus zur Erkennung von Kollisionen gestartet, um gleichzeitige Aufsynchronisationversuche mehrerer Endstellen 2, 3, 4, 5 zu detektieren. Dazu werden mehrere zeitlich gestaffelte logische Korrelatoren verwendet. Erst wenn eine einzelne Endstelle 2, 3, 4, 5 isoliert ist, z.B. durch ein im Vorwärtskanal ausgesandtes Blockierungssignal worauf die Endstellen 2, 3, 4, 5 beispielsweise gesteuert durch einen Splitting-Algorithmus reagieren, werden die nachfolgenden Schritte der Synchronisation wie Identifikation, Authentizitätskontrolle, Kommunikation etc. durchgeführt.

## Patentansprüche

1. Sendeeinrichtung (20) für ein synchrones Mehrpunkt-zu-Punkt CDMA Netzwerk (NET), beinhaltend eine erste Einheit (23) zur Generierung eines CDMA-kodierten Informationssignals und eine zweite Einheit (21) zur Generierung eines Synchronisationssignals, wobei der Signalpegel des Synchronisationssignals telemetrisch einstellbar ist, und wobei das Synchronisationssignal im gleichen Übertragungskanal wie das Informationssignal ausgesandt wird,
**dadurch gekennzeichnet,**
**daß** die zweite einheit eingerichtet ist das Synchronisationssignal mittels eines speziellen Synchronisations-Kodes zu kodieren, der nicht dem CDMA-Kommunikations-Kode der Informationssignale entspricht und der wesentlich kürzer ist als der CDMA-Kommunikations-Kode der Informationssignale.

2. Empfangseinrichtung (10) für ein synchrones Mehrpunkt-zu-Punkt CDMA Netzwerk (NET), beinhaltend eine erste Einheit (15) zum Empfang und zur Detektion eines CDMA-kodierten Informationssignals und eine zweite Einheit (11, 12) zum Empfang und zur Detektion eines Synchronisationssignals, wobei das Synchronisationssignal im gleichen Übertragungskanal wie das Informationssignal übertragen wird,
**dadurch gekennzeichnet,**
**daß** die zweite Einheit (11, 12) einen logischen Korrelator (11) zur Korrelation der mindestens zwei zeitlich nacheinander ausgesandten, identischen Synchronisationssignale mit einem speziellen Synchronisations-Kode, der nicht dem CDMA-Kommunikations-Kode der Informationssignale entspricht und der wesentlich kürzer ist als der CDMA-Kommunikations-Kode der Informationssignale, und einen Akkumulator (12) zur Akkumulation der korellierten Synchronisationssignale beinhaltet, mittels derer die Detektion des Synchronisationssignals durchführbar ist.

3. Synchronisationsverfahren für ein synchrones Mehrpunkt-zu-Punkt CDMA Netzwerk (NET), das mindestens zwei Endstellen (2, 3, 4, 5) und eine Zentrale (1) beinhaltet, wobei die Endstellen (2, 3, 4, 5) CDMA-kodierte Informationssignale und zur Aufsynchronisation Synchronisationssignale zur Zentrale (1) übertragen, wobei die Signalpegel der Synchronisationssignale durch die Zentrale (1) telemetrisch einstellbar sind und die Synchronisationssignale im gleichen Übertragungskanal wie die Informationssignale übertragen werden,
**dadurch gekennzeichnet,**
**daß** jede Endstelle (2, 3, 4, 5) zur Aufsynchronisation zeitlich nacheinander mindestens zwei identische Synchronisationssignale zur Zentrale (1) überträgt, und daß die Zentrale (1) das Synchronisationssignal durch logische Korrelation (11) mit einem speziellen Synchronisations-Kodes, der nicht dem CDMA-Kommunikations-Kode der Informationssignale entspricht und der wesentlich kürzer ist als der CDMA-Kommunikations-Kode der Informationssignale, und anschließender Akkumulation (12) der korellierten Synchronisationssignale detektiert.

4. Sendeeinrichtung (20) nach Anspruch 1 oder Empfangseinrichtung (10) nach Anspruch 2 oder Verfahren nach Anspruch 3, **dadurch gekennzeichnet, daß** als Synchronisations-Kode ein Barker Kode verwendet wird.

5. Empfangseinrichtung (10) nach Anspruch 2, **dadurch gekennzeichnet, daß** mindestens zwei logische Korrelatoren und mindestens zwei Akkumulatoren vorgesehen sind, um mindestens zwei Synchronisationsignale mit unterschiedlichem Zeitbezug zu den Informationssignalen zu detektieren und/oder die Verwendung mehrerer Synchronisations-Kodes zu ermöglichen.

6. Empfangseinrichtung (10) nach Anspruch 2 oder 5, **dadurch gekennzeichnet, daß** mindestens ein Matched Filter zur Implementierung eines Korrelators oder mehrerer Korrelatoren dient.

7. Sendeeinrichtung (20) nach Anspruch 1 oder Empfangseinrichtung (10) nach Anspruch 2 oder Verfahren nach Anspruch 3, **dadurch gekennzeichnet, daß** die Länge des Synchronisations-Kodes mindestens um den Faktor fünf kürzer ist als die Länge des CDMA-Kommunikations-Kodes der Inforrnationssignale.

8. Empfangseinrichtung (10) nach Anspruch 2 oder Verfahren nach Anspruch 3, **dadurch gekennzeichnet, daß** vor oder nach der Akkumulation eine Quadrierung erfolgt.

9. Verfahren nach Anspruch 3, **dadurch gekennzeichnet, daß** nach Schätzung der Anzahl kollidierender Endstellen (2, 3, 4, 5) unterschiedliche Kollisionsauflösungsverfahren verwendet werden.

10. Verfahren nach Anspruch 3, **dadurch gekennzeichnet, daß** die Zentrale (1) geeignet ist, die Sendeleistung der Synchronisationssignale der Endstellen (2, 3, 4, 5) telemetrisch derart vorzugeben, daß der Summen-Signalpegel aller gleichzeitig gesendeten Sychronisationssignale mindestens 10dB niedriger als der Summen-Signalpegel aller gleichzeitig gesendeten Informationssignale ist.

## Claims

1. A transmitting facility (20) for a multipoint-to-point synchronous CDMA network (NET), comprising a first unit (23) for generating a CDMA-coded information signal and a second unit (21) for generating a synchronization signal, the level of the synchronization signal being telemetrically adjustable, and the synchronization signal being transmitted in the same transmission channel as the information signal,
**characterized in**
**that** the second unit is adapted to encode the synchronization signal using a specific synchronization code which does not correspond to the CDMA communication code of the information signals and which is substantially shorter than the CDMA communication code of the information signals.

2. A receiving facility (10) for a multipoint-to-point synchronous CDMA network (NET), comprising a first unit (15) for receiving and detecting a CDMA-coded information signal and a second unit (11, 12) for receiving and detecting a synchronization signal, the synchronization signal being transmitted in the same transmission channel as the information signal,
**characterized in**
**that** the second unit (11, 12) comprises a logical correlator (11) for correlating at least two serially transmitted, identical synchronization signals with a specific synchronization code which does not correspond to the CDMA communication code of the information signals and which is substantially shorter than the CDMA code of the information signals, and an accumulator (12) for accumulating the correlated synchronization signals, by means of which the detection of the synchronization signal can be carried out.

3. A synchronization method for a multipoint-to-point synchronous CDMA network (NET) comprising at least two terminals (2, 3, 4, 5) and a center (1), the terminals (2, 3, 4, 5) transmitting CDMA-coded information signals and synchronization signals to the center (1), the levels of the synchronization signals being telemetrically adjustable by the center (1), and the synchronization signals being transmitted in the same transmission channel as the information signals,
**characterized in**
**that** in order to achieve lock-on, each of the terminals (2, 3, 4, 5) transmits at least two identical synchronization signals serially to the center (1), and that the center (1) detects the synchronization signal by logically correlating (11) the synchronization signal with a synchronization code which does not correspond to the CMDA communication code of the information signals and which is substantially shorter than the CDMA communication code of the information signals, and by subsequently accumulating (12) the correlated synchronization signals.

4. A transmitting facility (20) as claimed in claim 1 or a receiving facility (10) as claimed in claim 2 or a method as claimed in claim 3, **characterized in that** the synchronization code is a Barker code.

5. A receiving facility (10) as claimed in claim 2, **characterized in that** at least two logical correlators and at least two accumulators are provided for detecting at least two synchronization signals with different time relationships to the CDMA signals and/or for allowing the use of two or more synchronization codes.

6. A receiving facility (10) as claimed in claim 2 or 5, **characterized in that** at least one matched filter serves to implement one or more correlators.

7. A transmitting facility (20) as claimed in claim 1 or a receiving facility (10) as claimed in claim 2 or a method as claimed in claim 3, **characterized in that** the length of the synchronization code is shorter than the length of the CDMA communication code of the information signals by at least a factor of five.

8. A receiving facility (10) as claimed in claim 2 or a method as claimed in claim 3, **characterized in that** prior to or after the accumulation, a squaring operation is performed.

9. A method as claimed in claim 3, **characterized in that** after estimation of the number of colliding terminals (2, 3, 4, 5), different contention-resolving techniques are used.

10. A method as claimed in claim 3, **characterized in that** the center (1) is adapted to telemetrically specify the transmit power of the synchronization signals of the terminals (2, 3, 4, 5) in such a way that the sum level of all simultaneously transmitted synchronization signals is at least 10 dB lower than the sum level of all simultaneously transmitted information signals.

## Revendications

1. Dispositif d'émission (20) pour un réseau synchrone AMRC multipoint à point (NET), contenant une première unité (23) pour la génération d'un signal d'information codé en AMRC, et une seconde unité (21) pour la génération d'un signal de synchronisation, le niveau du signal de synchronisation pouvant être réglé par télémétrie, et le signal de synchronisation étant relié dans le même canal de transmission que le signal d'information,
**caractérisé en ce que**
la seconde unité est aménagée pour coder le signal de synchronisation au moyen d'un code de synchronisation spécial qui ne correspond pas au code de communication AMRC des signaux d'information et qui est nettement plus court que le code de communication AMRC des signaux d'information.

2. Dispositif de réception (10) pour un réseau synchrone AMRC multipoint à point (NET), comprenant une première unité (15) pour la réception et pour la détection d'un signal d'information codé en AMRC et une seconde unité (11, 12) pour la réception et pour la détection d'un signal de synchronisation, le signal de synchronisation étant transmis dans le même canal de transmission que le signal d'information,
**caractérisé en ce que**
la seconde unité (11, 12) contient un corrélateur (11) logique pour la corrélation des au moins deux signaux de synchronisation identiques et émis successivement dans le temps avec un code de synchronisation spécial, qui ne correspond pas au code de communication AMRC des signaux d'information et qui est sensiblement plus court que le code de communication AMRC des signaux d'information et un accumulateur (12) pour l'accumulation des signaux de synchronisation corrélés, au moyen desquels la détection du signal de synchronisation peut être effectuée.

3. Procédé de synchronisation pour un réseau synchrone AMRC multipoint à point (NET), qui contient au moins deux stations terminales (2, 3, 4, 5) et un central (1), les stations terminales (2, 3, 4, 5) transmettant des signaux d'information codés en AMRC et pour la synchronisation montante des signaux de synchronisation au central (1), le niveau des signaux de synchronisation pouvant être réglé par télémétrie par le central (1) et les signaux de synchronisation étant transmis dans le même canal de transmission que les signaux d'information,
**caractérisé en ce que**
chaque station terminale (2, 3, 4, 5) transmet pour la synchronisation montante de façon successive au moins deux signaux de synchronisation identiques au central (1) et **en ce que** le central (1) détecte le signal de synchronisation par corrélation logique (11) avec un code de synchronisation spécial, qui ne correspond pas au code de communication AMRC des signaux d'information et qui est sensiblement plus court que le code de communication AMRC des signaux d'information, et avec une accumulation (12) consécutive des signaux de synchronisation corrélés.

4. Dispositif d'émission (20) selon la revendication 1 ou dispositif de réception (10) selon la revendication 2 ou procédé selon la revendication 3, **caractérisé en ce qu'**un code Barker est utilisé comme code de synchronisation.

5. Dispositif de réception (10) selon la revendication 2,
**caractérisé en ce qu'**au moins deux corrélateurs logiques et au moins deux accumulateurs sont prévus pour détecter au moins deux signaux de synchronisation avec un rapport de temps différent par référence aux signaux d'information et/ou permettent l'utilisation de plusieurs codes de synchronisation.

6. Dispositif de réception (10) selon la revendication 2 ou 5, **caractérisé en ce qu'**au moins un Matched Filter sert à la mise en oeuvre d'un corrélateur ou de plusieurs corrélateurs.

7. Dispositif d'émission (20) selon la revendication 1 ou dispositif de réception (10) selon la revendication 2 ou procédé selon la revendication 3, **caractérisé en ce que** la longueur du code de synchronisation est au moins cinq fois plus courte que la longueur du code de communication AMRC des signaux d'information.

8. Dispositif de réception (10) selon la revendication 2 ou procédé selon la revendication 3, **caractérisé en ce qu'**une élévation au carré est effectuée avant ou après l'accumulation.

9. Procédé selon la revendication 3, **caractérisé en ce que** différents procédés de résolution de collision sont utilisés après l'évaluation du nombre de stations terminales (2, 3, 4, 5) entrant en collision.

10. Procédé selon la revendication 3, **caractérisé en ce que** le central (1) est approprié pour prédéfinir la puissance d'émission des signaux de synchronisation des stations terminales (2, 3, 4, 5) par télémétrie de telle sorte que le niveau de signal cumulé de tous les signaux de synchronisation envoyés en même temps est inférieur d'au moins 10 dB au niveau de signal cumulé de tous les signaux d'information envoyés en même temps.
